# EUROPÄISCHE PATENTSCHRIFT

(11) **EP 1 777 992 B1**
(45) Veröffentlichungstag und Bekanntmachung des Hinweises auf die Patenterteilung: **29.05.2013**
(21) Anmeldenummer: 06017871.2
(22) Anmeldetag: 28.08.2006
(51) Int. Cl.: H05B 3/34

(54) **Flexibles Flächenheizelement, insbesondere für Sitzheizungen, und Verfahren zur Herstellung eines flexiblen Heizelements**
Flexible flat heating element, particularly for seats heating, and the manufacturing method of a flexible heating elements
Elément flexible plat, en particulier pour chauffages de sièges, et le procédé de fabrication d'un élément chauffable flexible

(30) Priorität: 19.10.2005 DE 102005050459
(43) Veröffentlichungstag der Anmeldung: 25.04.2007
(73) Patentinhaber: I.G. Bauerhin GmbH, 63584 Gründau (DE)
(72) Erfinder: Hilmer, Josef, 63584 Gründau (DE)
(74) Vertreter: Grimm, Ekkehard

(56) Entgegenhaltungen:
- DE-A- 4 142 774

## Beschreibung

Die vorliegende Erfindung betrifft ein flexibles Flächenheizelement, insbesondere für Sitzheizungen gemäß dem Oberbegriff des Anspruchs 1.

Weiterhin betrifft die vorliegende Erfindung ein Verfahren zur Herstellung eines flexiblen Flächenheizelements gemäß dem Oberbegriff des Anspruchs 17.

Sohließlich ist die Erfindung gemäß Anspruch 22 auf die Verwendung eines solchen Flächenheizelements gerichtet.

In Kraftfahrzeugen ist es üblich Sitze elektrisch zu beheizen. Dies wird im allgemeinen dadurch realisiert, dass eine Heizzwischenlage zwischen dem Sitzkern, welcher aus Schaum oder Fasermaterial besteht, und dem Bezug eingebracht wird. Diese Heizzwischenlage wird über einen Kabelanschluss mit dem Bordnetz des Kraftfahrzeuges verbunden. Durch den Stromfluss wird ein elektrischer Leiter erhitzt und gibt Wärme an die Oberfläche des Sitzes ab. Eine Temperaturregelung oder Temperatursteuerung findet üblicherweise mittels elektronischer Steuergeräte statt, die entweder die Temperatur durch einen zusätzlich in die Heizung eingebrachten Temperaturfühler erfassen und die Temperatur durch Ein- und Ausschalten der Stromzuführung konstant halten oder aber mittels einer Zeitsteuerung die zugeführte Leistung begrenzen.

Eine besondere Ausführung eines solchen Flächenheizelementes besteht aus zwei sich gegenüberliegenden Kontaktleisten, die im allgemeinen aus metallischen Leitem bestehen und die die Aufgabe haben, die Heizleiter, welche von Kontaktleiste zu Kontaktleiste verlaufen, elektrisch mit Strom zu versorgen. Dies geschieht dadurch, dass die Heizleiter die Kontaktleiter schneiden und mechanisch an diese angepresst sind, so dass ein elektrischer Kontakt entsteht. Es entsteht dadurch eine Parallelschaltung der Heizleiter, wobei durch Auswahl der elektrischen Leitwerte der Heizleiter die Heizleistung eingestellt werden kann.

Solche Flächnheizelemente sind aus der DE 4142774 A1 sowie der DE 4020580 A1 bekannt Bei dem Flächenheizelement nach der DE 4142774 A1, das die Merkmale der Oberbegriffe der unabhängigen Ansprüche 1 und 17 aufweist, sind die Heizteiter als Schussfäden sinusförmig über Maschenfäden eines gewirkten Grundmaterials gelegt und zumindest an den Maxima der Amplituden in die Maschen des textilen Grundmaterials eingebunden. Stromzuführungsleiter sind als Kontaktleisten an sich gegenüberliegenden Rapportkanten rechtwinklig zur Sinusachse angeordnet und jeder Heizleiter ist mit jedem Kontaktleiter elektrisch leitend verbunden Die Heizleiter können aus Stahidraht oder aus Kohlefaser bestehen. Die Kontaktleiter bestehen aus Kohlefaser-Material. in einer Ausführungsform kann als Heizleiter ein Filament aus Kohlefasen verwendet werden. Nach der DE 4020580 A1 ist ein elektrisches Flächenheizelement aus netzartiger Maschenware mit Heizieltern und an die Enden der Heizleiter angeschlossenen Kontaktleitem aufgebaut. Die Heizleiter verlaufen im Wesentlichen parallel zueinander und sind in Abständen in den Maschenverbund der textilen Maschenware derart fest eingebunden, dass sie schlingen, wellen oder mäanderförmig verlaufen; die Kontaktleiter verlaufen im Wesentlichen senkrecht zu den Heizleitem.

Bei dieser Art von Sitzheizung müssen die Kontaktleisten relativ zu den Heizleitem einen hohen Strom führen, so dass sich diese dadurch übermäßig stark erwärmen, was nachteilig ist.

Dieses Problem wird bei den bekannten Flächenheizelementen dadurch gelöst das die Kontaktleisten aus Kupfer oder Kupferlegierungen bestehen, also Metallen, die hohe Leitwerte besitzen.

Ein weiteres Problem, das solchen Sitzheizungen zugeordnet ist, sind die im Sitz auftretenden, hohen mechanischen Belastungen, die dazu führen können, dass Teile der Kontaktleiste oder ganze Kontaktleisten brechen. Ein teitweises Brechen der Kontaktleisten führt zu Querschnittsverringerungen und damit zu geringeren Leitwerten an der Kontaktleiste im Bereich der Bruchstelle. In Bezug auf den Strom ergeben sich dadurch an der Bruchstelle hohe Verlustleistungen und damit Überhitzungsstellen.

Um diese Probleme zu lösen wurden die Leiter von Kontaktleisten wellenförmig ausgelegt, was in der DE4101290 C2 beschrieben ist. Auch wurden Kern-Manteldrähte eingesetzt, deren Kern aus Kupfer oder einer Kupferleitung besteht und deren Mantel aus Stahl, oder umgekehrt, besteht; solche Arten von Heizelementen sind aus der DE10206336 A1 bekannt. Auch Lösungen mit Mehrfacheinspeisungen der Kontaktleiter sind bekannt.

Alle diese Ausführungsformen tragen immer noch das Risiko eines Bruches der Kontaktleiste bei extremer Faltenbildung des Bezuges. Gerade die Technik, ein solches Flächenheizelement in den Sitzbezug einzunähen, birgt durch die Nähe des Heizelementes zur Sitzoberfläche die Gefahr von Faltenbildung am Bezug und Heizelement und damit auch Faltenbildung und Bruch der Kontaktleiste, auch bei oben genannten Ausführungen.

Aus der DE 4312622 ist bereits bekannt, dass elektrische Leiter aus Stahl in Sitzheizungen breite Anwendung finden. Gerade dünne Einzelfilamente und eine hohe Anzahl von Einzelleitern halten bei der Anwendung als Heizleiter hohen Belastungen stand und sind beispielsweise in Edelstahlausführung bis zu einem Filamentdurchmesser von 8 Mikrometer erhältlich. Solche Stahlfilamentleiter sind jedoch für sich wegen der geringen Leitfähigkeit des Stahls als Kontaktleiste für Flächenheizelemente für Sitzheizungen unbrauchbar.

Aus der DE 4124684 A1 ist ein Flächenheizelement bekannt, das aus im Wesentlichen parallel angeordneten Heizdrähten, die an ihren Enden und/oder Umlenkstellen mit Stromzuführungsleitern elektrisch verbunden sind, wobei jeder Stromzuführungsleiter als flexible Kontaktierungsleiste mit mehreren Einzelleitern ausgebildet ist, die mit den Heizdrähten elektrisch parallel geschaltet sind, und wobei das Flächenheizelement in einem elastischen Trägermaterial integriert ist, besteht. In diesem Dokument werden auch leitfähige Bänder beschrieben, zwischen denen der Heizdraht angeordnet wird. Diese leitfähigen Bänder können aus Stahl oder aus Kupfer, oder aus Mischungen von beiden Materialien, hergestellt werden.

Schließlich beschreibt die DE 4101290 C2 ein elektrisches Flächenheizelement mit zwischen Kontaktleitem parallel zueinander verlegten Heizleitern, wobei die Kontaktleiter und die Heizleiter wellenförmig in der Ebene des Heizelements verlegt sind.

Die Kontaktleiter, die an den Rändern des Heizfelds vorgesehen sind, sind in verschiedenen Ausführungsformen als Kontaktstreifen ausgeführt. Die Kontaktstreifen können in einer Ausführungsform aus einem Trägerband bestehen, auf dem die Kontaktleiter angebracht sind. Auch ist für die Kontaktleiter ein geflochtenes Metallgewirke angegeben. Nach diesem Dokument wird nur eine Leiterart für die Kontaktleiter vorgesehen, nämlich solche aus Kupfer oder solche in Form eines Metallgewirkes.

Der vorliegenden Erfindung liegt nun die Aufgabe zugrunde, eine Kontaktleiste zu schaffen, die trotz hoher mechanischer Belastung und hohen elektrischen Strömen die Bruchgefahr soweit reduziert, dass damit bestückte Flächenheizelemente sowohl zwischen Bezug und Sitzkem als auch im Bezug eingesetzt werden können, ohne dass die Gefahr einer Überhitzung oder sogar eines Brandes entsteht.

Die Aufgabe des Anmeldungsgegenstands wird durch den Gegenstand des Patentanspruchs 1 gelöst.

Erst in Verbindung mit einem zweiten Leitertyp großer Leitfähigkeit können diese im Kontaktleiter eingesetzt werden, wobei die Anordnung der beiden Leitertypen und die Verbindung untereinander ein ausschlaggebende Rolle spielt.

Dabei wird die Tatsache genutzt, dass die Funktion der Kontaktleiste auch vollständig dann gegeben ist, wenn der Leiter höherer Leitfähigkeit an einer oder mehreren Stelle(n) unterbrochen ist. An diesen Unterbrechungsstellen tragen ausschließlich die Stahlleiter zur Stromleitung bei. Durch den sehr kurzen Bereich, welcher jeweils durch die Enden der Leiter höherer Leitfähigkeit begrenzt ist, ist die an der Unterbrechungsstelle ent-stehende Verlustleistung so gering, dass ein Brand oder eine spürbare Überhitzung der Oberfläche ausgeschlossen werden kann.

Besonders kurz kann der Bereich, in dem nur die Stahlleiter den Strom aufnehmen, gehalten werden, indem die Kontaktleiste(n) aus mindestens einem Strang und vorzugsweise mehreren Strängen Stahlleitern besteht (bestehen) und auf der gegenüberliegenden Seite der Stahlleiter mindestens ein Strang und vorzugsweise mehrere wellenförmig verlaufende Stränge von Leitern höherer Leitfähigkeit als die Stahlleiter angeordnet ist bzw. sind, so dass die Verlustleistung besonders gering ist und die Überhitzung nur ein Niveau erreicht, welches weder zum Brand noch zu spürbaren Überhitzungen der Sitzoberfläche führt.

Die Anzahl an Stahlfilamenten, die zu einem Bündel, einen jeweiligen Leiter bildend, zusammengefasst sind, kann zwischen 20 bis 2000 Einzelfilamenten betragen; vorzugsweise sollte die Anzahl 150 bis 500 Einzelfilamenten betragen.

Die Dicke der einzelnen Stahlfilamente, die zu einem Bündel zusammengefasst werden, liegt bei 8 bis 15 µm. Die Dicke der einzelnen Filamente der höheren Leitfähigkeit sollte zwischen 50 µm und 100 µm betragen. Diese unterschiedlichen Dicken, zum einen der einzelnen Stahlfilamente, zum anderen der Filamente der höheren Leitfähigkeit, ergeben sich aufgrund der Tatsache, dass Stahlfilamente sehr dünn hergestellt werden können, ohne dass die Fasern brechen. Bevorzugt werden die Querschnitte der einzelnen Stahlfilamente mindestens dreifach kleiner gewählt als die Querschnitte der Filamente der Leiter mit höherer Leitfähigkeit.

Vorzugsweise sollten die Querschnitte der einzelnen Stahlfilamente mindestens 10 bis 30 mal kleiner sein als die Querschnitte der Filamente der Leiter mit höherer Leitfähigkeit.

Die Leiter höherer Leitfähigkeit verlaufen wellen- oder mäanderförmig, die jeweiligen Stahlleiter kreuzend und mit diesen in Kontakt stehend; dadurch ist gewährleistet, dass die zwei Leiterarten untereinander elektrisch verbunden sind und bei Bruch der Leiter höherer Leitfähigkeit die Fehlstelle lokal begrenzt bleibt und die gebrochenen Leiterenden nicht voneinander wegwandern.

Aus Korrosionsschutzgründen sollten die Stahlfilamente durch Edelstahlfilamente gebildet werden. Dagegen werden die Filamente der Leiter mit höherer Leitfähigkeit, aus Kupfer oder Kupferlegierungen, aufgrund des Leitwerts dieses Materials, gebildet.

Auch können die Filamente der Leiter mit höherer Leitfähigkeit zusätzlich eine Korrosionsschutzschicht aufweisen, die bevorzugt aus Zinn, Silber oder Nickel gebildet ist.

Verfahrensgemäß werden bevorzugt die beiden Leiter der Kontaktleiste in das textile Band mittels Wirktechnik eingearbeitet.

Zum Befestigen der Leiter an dem textilen Band sollten Polyesterfäden oder Polyamidfäden eingesetzt werden, da die textilen Fasern sehr dünn gehalten werden können und die Heizleiter beim Aufliegen auf die Kontaktleiter nur wenig behindern.

Besonders bevorzugt ist eine Verfahrensweise, bei der die Leiter mittels Nähwirktechnik auf das Band aufgebracht werden; hierbei wird eine Leiterart im Kurz- oder Teilschuss eingebracht, und ausschließlich der/die Polyesterfaden/Polyesterfäden oder der/die Polyamidfaden/Polyamidfäden bildet/bilden die Maschen. Mit dieser Verfahrensweise ist gewährleistet, dass die Leiterarten zueinander vorfixiert sind und sich in weiteren Verfahrensschritten nicht mehr zueinander verschieben können.

Um eine hohe Dehnungsfähigkeit und Nachgiebigkeit der Kontaktleisten, die die Stromzuführungen des flexiblen Flächenheizelements bilden, zu erreichen, sollten mindestens die Leiter großen Querschnittes der Kontaktleiste wellenförmig oder mäanderförmig über das Trägerband angeordnet werden, wobei die Wellenachse hierbei der Bandrichtung entspricht.

Bevorzugt werden Flächenheizelemente, wie sie vorstehend beschrieben sind, als Flächenheizelemente für Sitzheizungen von Fahrzeugen eingesetzt, wo die vorstehend angegebenen Vorteile besonders zum Tragen kommen.

Weitere Einzelheiten und Merkmale der Erfindung ergeben sich aus der nachfolgenden Beschreibung von Ausführungsbeispielen anhand der Zeichnungen. In der Zeichnung zeigt
- Figur 1: eine schematische Darstellung einer Kontaktleiste bzw. eines Kontaktbands gemäß der Erfindung, das als Stromzuführung in dem Flächenheizelement eingesetzt wird, wie es in Figur 3 dargestellt ist,
- Figur 2: einen Schnitt durch das flexible Flächenheizelement der Figur 3 im Bereich einer Kontaktleiste bzw. einem Kontaktband, wie es in Figur 1 dargestellt ist, und zwar quer zu den parallel verlaufenden Leitern, und
- Figur 3: ein flexibles Flächenheizelement mit schematisch angedeuteten Kontaktleisten an beiden Randbereichen.

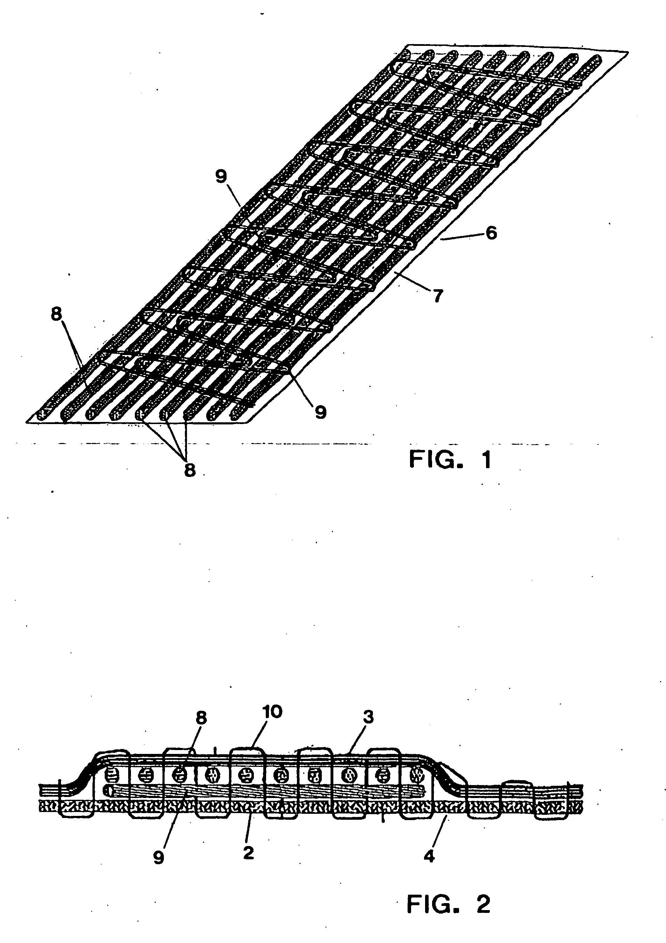

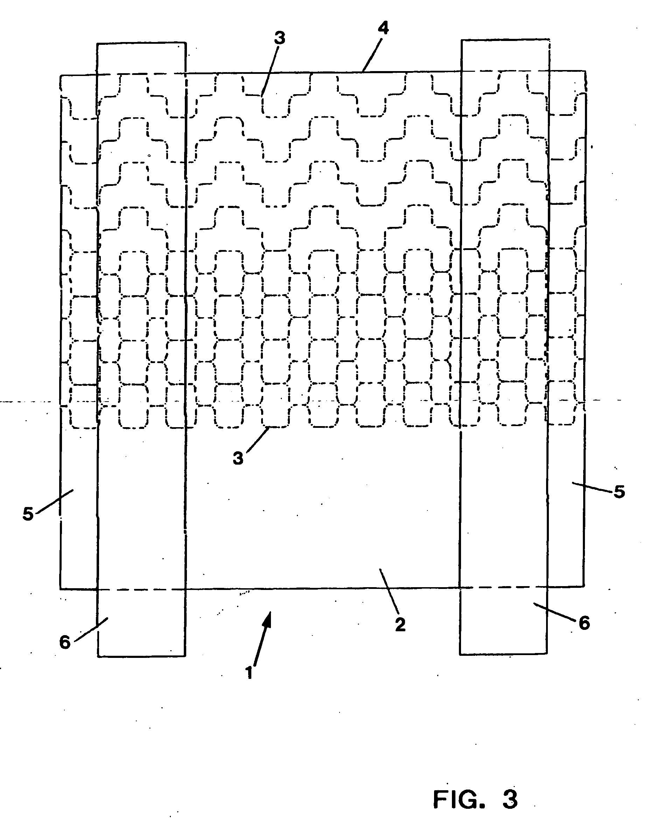

In Figur 3 ist ein flexibles Flächenheizelement 1 gezeigt, wie es beispielsweise in den Sitz eines Fahrzeugs als Sitzheizung eingenäht werden kann. Dieses Flächenheizelement 1 umfasst ein textiles Trägermaterial 2, auf dem in vorgegebenen Mustern Heizleiter 3, ein Heizfeld 4 bildend, mittels Wirktechnik eingearbeitet sind. Je nach erforderlicher Heizleistung in den einzelnen Bereichen des Heizfelds 4 können die Heizleiter 3 näher oder weiter zueinander beabstandet verlaufen bzw. die Anzahl an Heizleitern pro Flächeneinheit kann vergrößert oder verringert werden, wie dies beispielhaft in Figur 3 im oberen Bereich und im unteren Bereich des Heizfelds 4 dargestellt ist. Entlang beider Randbereiche 5 des Heizfelds 4 ist jeweils eine Kontaktleiste 6 aufgesetzt, über die das Heizfeld mit Strom versorgt wird. Eine solche Kontaktleiste 6 ist in ihren Einzelheiten in den Figuren 1 und 2 gezeigt.

Wie anhand der Figuren 1 und 2 zu erkennen ist, weist eine solche Kontaktleiste 6 als Träger ein textiles Band 7 auf, das beispielsweise aus Polyester oder Polyamid besteht, hergestellt in Wirktechnik. In Längsrichtung des textilen Bands 7 verlaufen mehrere Leiter 8, die jeweils aus Bündeln von Stahlfilamenten zusammengesetzt sind. Diese Stahlfilamente können einen Durchmesser im Bereich von 8 bis 30 µm haben; die Anzahl der Einzelfilamente kann zwischen 150 bis 500 betragen. Im Wesentlichen quer zu den annähernd parallel ausgerichteten Leitern aus Stahlfilament-Bündeln ist eine zweite Leiterart angeordnet, die wellen- oder mäanderförmig verläuft, so dass diese Leiter 9 der zweiten Leiterart die Stahlfilament-Leiter kreuzen. Diese Leiter 9 der zweiten Leiterart sind aus einem Material höherer Leitfähigkeit verglichen mit den Stahlfilament-Leitern 8 gebildet, wiederum jeweils aus Bündeln einer Vielzahl von Einzelfilamenten. Bei dieser zweiten Leiterart kann es sich um Leiter 9 aus Kupfer oder Kupferlegierungen handeln, also einem Material, das gegenüber den Stahlfilamenten eine höhere Leitfähigkeit besitzt. Die Leiter 8, 9 dieser Kontaktleiste 6 sind auf dem textilen Band 7 mittels Wirktechnik befestigt, was in Figur 1 nicht in dieser Einzelheit dargestellt ist.

In Figur 2 ist die Kontaktleiste 6, wie sie in Figur 1 gezeigt ist, in einer Schnittdarstellung auf dem Heizfeld 4 angeordnet. Im Gegensatz zu der Kontaktleiste 6 der Figur 1 liegen allerdings die wellen- oder mäanderförmig verlaufenden Leiter höherer Leitfähigkeit unterhalb der Stahlleiter 8, d.h. die Kontaktleiste, wie sie in Figur 2 eingesetzt ist, ist gegenüber der Darstellung der Figur 1 gedreht. Anhand der Figur 2 ist zu erkennen, dass die Kontaktleiste 6 mit dem textilen Band 7 und dem Heizfeld 4 mit seinem textilen Trägermaterial 2 und den Heizleitern 3 zu einem Verbund über einen textilen, maschen bildenden Faden 10 mittels Nähwirktechnik oder Wirktechnik eingewirkt ist.

Um ein Flächenheizelement 1, wie es in Figur 3 dargestellt ist, zu fertigen, werden zunächst die Kontaktleisten 6 in Form der textilen Bänder 7 mit den zwei Leiterarten 8 und 9 hergestellt, anschließend wird diese Kontaktleiste 6 mit der Unterseite des textilen Bands 7 auf dem textilen Trägermaterial 2 für das Heizfeld 4 aufgeklebt und damit fixiert, anschließend werden die Heizleiter 3 des Heizfelds 4, die bevorzugt aus Kohlenstofffasern gebildet sind, aufgebracht, indem sie in den vorgegebenen Mustern auf dem Trägermaterial 2 aufgelegt und daran vernäht werden, und gleichzeitig wird die Kontaktleiste 6, die zunächst an dem Trägermaterial nur fixiert wurde, mittels Wirktechnik in das textile Trägermaterial 2 eingearbeitet.

Es ist ersichtlich, dass dieses Flächenheizelement, wie es in den Figuren dargestellt ist, sehr flexibel und nachgiebig ist, und zwar nicht nur im Bereich des Heizfelds 4, sondern auch im Bereich der Kontaktleisten 6. Außerdem ist durch die zwei verschiedenen Leiterarten, d.h. zum einen der Stahlleiter 8 und zum anderen der Leiter 9 höherer Leitfähigkeit als die Stahlleiter, im vorliegenden Beispiel von Leitern aus Kupfer oder Kupferdrähten, gewährleistet, dass ein hoch leitfähiges, und für hohe Biegewechselzyklen geeignetes Kontaktband entsteht. Schließlich wird durch den Aufbau der Leiter 8 und 9 aus einer großen Anzahl von sehr dünnen Einzelfilamenten erreicht, dass das Band weich ist und wenig Abzeichnung an der Bezugsoberfläche zeigt.

## Patentansprüche

1. Flexibles Flächenheizelement (1), insbesondere für Sitzheizungen, mit einem flexiblen Trägermaterial (2), im Bereich dessen ein Heizfeld (4) aus Heizleitern (3) angeordnet ist, die mit mindestens einer Kontaktleiste (6) elektrisch leitend verbunden sind, wobei im Bereich der mindestens einen Kontaktleiste (6) zwei Leiterarten aus unterschiedlichem Material vorhanden sind und wobei die beiden Leiterarten elektrisch untereinander verbunden sind, **dadurch gekennzeichnet, dass** die Kontaktleiste (6), in Form eines textilen Bandes, das einen Anteil an Leitern (8) in Form von Stahlfilamenten und einen Anteil an Leitern (9) in Form von Filamenten einer höheren Leitfähigkeit als die der Stahlfilamente enthält, aufgebaut ist, wobei die Leiter (9) höherer Leitfähigkeit wellen- oder mäanderförmig, die jeweiligen Stahlleiter (8) kreuzend und mit diesen in Kontakt stehend, verlaufen und wobei die Leiter (9) höherer Leitfähigkeit nur über oder nur unter den Stahlfilamenten (8) liegen, und dass die Leiter (8, 9) mittels textiler und/oder metallischer Fäden auf dem textilen Band (7) gehalten sind, wobei das textile Band (7) mit dem Trägermaterial (2) verbunden ist.

2. Flexibles Flächenheizelement nach Anspruch 1, **dadurch gekennzeichnet, dass** eine Vielzahl von zu einem Bündel zusammengefassten Stahlfilamenten zumindest einzelne Leiter (8) bilden.

3. Flexibles Flächenheizelement nach Anspruch 1 oder 2, **dadurch gekennzeichnet, dass** zumindest einzelne Leiter (9) der höheren Leitfähigkeit aus einer Vielzahl von zu einem Bündel zusammengefassten Filamenten gebildet sind.

4. Flexibles Flächenheizelement nach Anspruch 2, **dadurch gekennzeichnet, dass** das Bündel der Stahlfilamente des jeweiligen Leiters (8) aus 20 bis 2000 Einzelfilamenten gebildet ist.

5. Flexibles Flächenheizelement nach Anspruch 4, **dadurch gekennzeichnet, dass** das Bündel der Stahlfilamente des jeweiligen Leiters (8) aus 150 bis 500 Einzelfilamenten gebildet ist.

6. Flexibles Flächenheizelement nach Anspruch 3, **dadurch gekennzeichnet, dass** die Filamente des jeweiligen Leiters (9) mit der höheren Leitfähigkeit aus 20 bis 500 Einzelfilamenten gebildet sind.

7. Flexibles Flächenheizelement nach einem der Ansprüche 1 bis 6, **dadurch gekennzeichnet, dass** die Dicke der einzelnen Stahlfilamente 8 bis 15 µm beträgt.

8. Flexibles Flächenheizelement nach einem der Ansprüche 1 bis 7, **dadurch gekennzeichnet, dass** die Dicke der einzelnen Filamente der höheren Leitfähigkeit etwa 50 µm beträgt.

9. Flexibles Flächenheizelement nach einem der Ansprüche 1 bis 8, **dadurch gekennzeichnet, dass** die Querschnitte der einzelnen Stahlfilamente (8) mindestens dreifach kleiner sind als die Querschnitte der Filamente der Leiter (9) mit höherer Leitfähigkeit.

10. Flexibles Flächenheizelement nach Anspruch 9, **dadurch gekennzeichnet, dass** die Querschnitte der einzelnen Stahlfilamente (8) mindestens 10 bis 30 mal kleiner sind als die Querschnitte der Filamente der Leiter (9) mit höherer Leitfähigkeit.

11. Flexibles Flächenheizelement nach einem der Ansprüche 1 bis 10, **dadurch gekennzeichnet, dass** die Leiter (8), gebildet aus den Stahlfilamenten, im Wesentlichen geradlinig verlaufen.

12. Flexibles Flächenheizelement nach einem der Ansprüche 1 bis 11, **dadurch gekennzeichnet, dass** entweder nur die Stahlleiter (8) oder nur die Leiter (9) höherer Leitfähigkeit mit den leitfähigen Fasern (3) des Heizfelds (4) elektrisch verbunden sind.

13. Flexibles Flächenheizelement nach einem der Ansprüche 1 bis 12, **dadurch gekennzeichnet, dass** die Stahlfilamente (8) durch Edelstahlfilamente gebildet sind.

14. Flexibles Flächenheizelement nach einem der Ansprüche 1 bis 13, **dadurch gekennzeichnet, dass** die Filamente der Leiter (9) mit höherer Leitfähigkeit aus Kupfer oder Kupferlegierungen gebildet sind.

15. Flexibles Flächenheizelement nach einem der Ansprüche 1 bis 14, **dadurch gekennzeichnet, dass** die Filamente der Leiter (9) mit höherer Leitfähigkeit zusätzlich eine Korrosionsschutzschicht aufweisen.

16. Flexibles Flächenheizelement nach Anspruch 15, **dadurch gekennzeichnet, dass** die Schutzschicht aus Zinn, Silber oder Nickel gebildet ist.

17. Verfahren zur Herstellung eines flexiblen Flächenheizelements (1), insbesondere eines flexiblen Flächenheizelements für Sitzheizungen, mit einem Heizfeld (4) aus Heizleitern (3), Insbesondere Kohlenstofffasern, die im Bereich eines flexiblen Trägermaterials (2) angeordnet werden und die mit mindestens einer Kontaktleiste (6) elektrisch verbunden werden, wobei im Bereich der Kontaktleiste (6) zwei Leiterarten aus unterschiedlichem Material vorhanden sind, die elektrisch leitend verbunden werden, **dadurch gekennzeichnet, dass** die Kontaktleiste (6) in Form eines textilen Bandes, das einen Anteil an Leitern (8) in Form von Stahlfilamenten und einen Anteil an Leitern (9) In Form von Filamenten einer höheren Leitfähigkeit als die der Stahlfilamente enthält, aufgebaut wird, wobei die Leiter (9) höherer Leitfähigkeit wellen- oder mäanderförmig, die jeweiligen Stahlleiter (8) kreuzend und mit diesen in Kontakt stehend, angeordnet werden und wobei die Leiter (9) höherer Leitfähigkeit nur über oder nur unter den Stahlfilamenten (8) liegen, und dass die Leiter (8, 9) mittels textiler und/oder metallischer Fäden auf dem textilen Band (7) gehalten werden, und wobei das textile Band (7) mit dem Trägermaterial (2) verbunden wird.

18. Verfahren nach Anspruch 17, **dadurch gekennzeichnet, dass** die beiden Leiter (8, 9) der Kontaktleiste (6) in das textile Band (10) mittels Wirktechnik eingearbeitet werden.

19. Verfahren nach Anspruch 17, **dadurch gekennzeichnet, dass** als Fäden zum Befestigen der Leiter (8, 9) an dem textilen Band (10) Polyesterfäden oder Polyamidfäden eingesetzt werden.

20. Verfahren nach Anspruch 17, **dadurch gekennzeichnet, dass** die Leiter (8, 9) mittels Nähwirktechnlk auf das Band (10) aufgebracht werden, wobei mindestens eine Leiterart im Kurz- oder Teilschuss eingebracht ist und ausschließlich der/die Polyesterfaden/Polyesterfäden oder der/die Polyamidfaden/Polyamidfäden Maschen bildet/bilden.

21. Verfahren nach Anspruch 17, **dadurch gekennzeichnet, dass** mindestens ein Leiter (9) der Kontaktleiste (6) wellenförmig oder mäanderförmig entlang des Trägerbands (7) angeordnet wird, wobei die Wellenachse der Bandrichtung entspricht.

22. Verwendung eines Flächenheizelements nach einem der Ansprüche 1 bis 16 als Flächenheizelement (1) für die Sitzheizung eines Fahrzeugsitzes.

## Claims

1. A flexible surface heating element (1), particularly for seat heaters, comprising a flexible carrier material (2), wherein in the portion thereof a heating field (4) of heating conductors (3) is arranged, which are connected electrically conducting to at least one contact strip (6), wherein two types of conductors composed of different material exist in the area of the at least one contact strip (6) and wherein the both types of conductors being electrically interconnected with each other, **characterized in that** the contact strip (6) is composed of a textile band, having a portion of conductors (8) in the form of steel filaments and a portion of conductors (9) in the form of filaments of a higher conductivity than that of the steel filaments, wherein the conductors (9) of higher conductivity extending wave-shaped or meandering, crossing the respective steel conductors (8) and being in contact with said conductors, and wherein the conductors (9) of higher conductivity extending only above or only under the steel filaments (8), and that the conductors (8, 9) are held by means of textile and/or metallic yarns on the textile band (7), wherein the textile band (7) is connected with the carrier material (2).

2. The flexible surface heating element according to claim 1, **characterized in that** at least individual conductors (8) are formed from a plurality of steel filaments combined to form a bundle.

3. The flexible surface heating element according to claim 1 or 2, **characterized in that** at least individual conductors (9) of the higher conductivity are formed from a plurality of filaments combined to form a bundle.

4. The flexible surface heating element according to claim 2, **characterized in that** the bundle of the steel filaments of the respective conductor (8) is formed from 20 to 2000 individual filaments.

5. The flexible surface heating element according to claim 4, **characterized in that** the bundle of the steel filaments of the respective conductor (8) is formed from 150 to 500 individual filaments.

6. The flexible surface heating element according to claim 3, **characterized in that** the filaments of the respective conductor (9) with the higher conductivity are formed from 20 to 500 individual filaments.

7. The flexible surface heating element according to any one of claims 1 to 6, **characterized in that** the thickness of the individual steel filaments is 8 µm to 15 µm.

8. The flexible surface heating element according to any one of claims 1 to 7, **characterized in that** the thickness of the individual filaments of the higher conductivity is about 50 µm.

9. The flexible surface heating element according to any one of claims 1 to 8, **characterized in that** the cross sections of the individual steel filaments (8) are at least three times smaller than the cross sections of the filaments of the conductors (9) of higher conductivity.

10. The flexible surface heating element according to claim 9, **characterized in that** the cross-sections of the individual steel filaments (8) are at least 10 to 30 times smaller than the cross sections of the filaments of the conductors (9) of higher conductivity.

11. The flexible surface heating element according to any one of claims 1 to 10, **characterized in that** the conductors (8), formed from the steel filaments, extend substantially linearly.

12. The flexible surface heating element according to any one of claims 1 to 11, **characterized in that** either only the steel conductors (8) or only the conductors (9) of higher conductivity are electrically connected to the conductive fibers (3) of the heating field (4).

13. The flexible surface heating element according to any one of claims 1 to 12, **characterized in that** the steel filaments (8) are formed by stainless steel filaments.

14. The flexible surface heating element according to any one of claims 1 to 13, **characterized in that** the filaments of the conductors (9) of higher conductivity are formed from copper or copper alloys.

15. The flexible surface heating element according to any one of claims 1 to 14, **characterized in that** the filaments of the conductors (9) of higher conductivity additionally comprise an anti-corrosion layer.

16. The flexible surface heating element according to claim 15, **characterized in that** the anti-corrosion layer is made from tin, silver or nickel.

17. A method for producing a flexible surface heating element (1), particularly a flexible surface heating element for seat heaters, comprising a heating field (4) of heating conductors (3), particularly carbon fibers, which are arranged in the area of a flexible carrier material (2) and which are electrically connected to at least one contact strip (6), wherein two types of conductors composed of different materials exist in the area of the contact strip (6) being electrically interconnected with each other, **characterized in that** the contact strip (6) is composed in form of a textile band (7) having a portion of conductors (8) in the form of steel filaments and a portion of conductors (9) in the form of filaments of a higher conductivity than that the steel filaments, wherein the conductors (9) of higher conductivity extending wave-shaped or meandering, crossing the respective steel conductors (8) and being in contact with said conductors, and wherein the conductors (9) of higher conductivity extending only above or only under the steel filaments (8), and that the conductors (8, 9) are held by means of textile and/or metallic yarns on the textile band (7), and wherein the textile band (7) is connected with the carrier material (2).

18. The method according to claim 17, **characterized in that** the both conductors (8, 9) of the contact strip (6) are incorporated into the textile band (10) by means of a knitting technique.

19. The method according to claim 17, **characterized in that** polyester yarns or polyamide yarns are used as yarns for fixing the conductors (8, 9) to the textile band (10).

20. The method according to claim 17, **characterized in that** the conductors (8, 9) are applied by means of a sewing/knitting technique to the band (10), at least one type of conductor being incorporated by short or partial weft and the polyester yarn(s) or the polyamide yarn(s) exclusively forming loops.

21. The method according to claim 17, **characterized in that** at least one conductor (9) of the contact strip (6) is arranged in wave-like or meandering fashion along the carrier band (7), the wave axis corresponding to the band direction.

22. Use of a surface heating element according to any one of the preceding claims 1 to 16 as a surface heating (1) element for the seat heater of a vehicle seat.

## Revendications

1. Elément chauffant mince de surface (1), flexible, notamment pour des systèmes de chauffage de sièges, comprenant un matériau de support flexible (2) dans la zone duquel est agencé un champ chauffant (4) en conducteurs chauffants (3), qui sont reliés à au moins un ruban de contact (6) par une liaison électriquement conductrice, élément chauffant dans lequel dans la zone du dit au moins un ruban de contact (6) existent au moins deux types de conducteurs en matériau différent, et dans lequel les deux types de conducteurs sont reliés mutuellement sur le plan électrique, **caractérisé en ce que** le ruban de contact (6) est réalisé sous la forme d'une bande textile, qui renferme une part de conducteurs (8) sous la forme de filaments d'acier et une part de conducteurs (9) sous la forme de filaments d'une conductivité plus élevée que celle des filaments d'acier, les conducteurs (9) de conductivité plus élevée s'étendant de manière ondulée ou en forme de méandres, en croisant les conducteurs d'acier (8) considérés et en étant en contact avec ceux-ci, et les conducteurs (9) de conductivité plus élevée se situant uniquement au-dessus ou uniquement en-dessous des filaments d'acier (8), et **en ce que** les conducteurs (8, 9) sont maintenus sur la bande textile (7) au moyen de fils textiles et/ou métalliques, la bande textile (7) étant reliée au matériau de support (2).

2. Elément chauffant mince de surface, flexible, selon la revendication 1, **caractérisé en ce qu'**un grand nombre de filaments d'acier rassemblés en un faisceau forment au moins des conducteurs (8) individuels.

3. Elément chauffant mince de surface, flexible, selon la revendication 1 ou la revendication 2, **caractérisé en ce qu'**au moins des conducteurs individuels (9) de conductivité plus élevée sont formés d'un grand nombre de filaments rassemblés en un faisceau.

4. Elément chauffant mince de surface, flexible, selon la revendication 2, **caractérisé en ce que** le faisceau des filaments d'acier du conducteur (8) considéré est constitué de 20 à 2000 filaments individuels.

5. Elément chauffant mince de surface, flexible, selon la revendication 4, **caractérisé en ce que** le faisceau des filaments d'acier du conducteur (8) considéré est constitué de 150 à 500 filaments individuels.

6. Elément chauffant mince de surface, flexible, selon la revendication 3, **caractérisé en ce que** les filaments du conducteur (9) considéré, de conductivité plus élevée, sont constitués de 20 à 500 filaments individuels.

7. Elément chauffant mince de surface, flexible, selon l'une des revendications 1 à 6, **caractérisé en ce que** l'épaisseur des filaments d'acier individuels vaut de 8 à 15 µm.

8. Elément chauffant mince de surface, flexible, selon l'une des revendications 1 à 7, **caractérisé en ce que** l'épaisseur des filaments individuels de conductivité plus élevée vaut environ 50 µm.

9. Elément chauffant mince de surface, flexible, selon l'une des revendications 1 à 8, **caractérisé en ce que** les sections transversales des filaments d'acier individuels (8) sont au moins trois fois plus petites que les sections transversales des filaments des conducteurs (9) de conductivité plus élevée.

10. Elément chauffant mince de surface, flexible, selon la revendication 9, **caractérisé en ce que** les sections transversales des filaments d'acier individuels (8) sont au moins 10 à 30 fois plus petites que les sections transversales des filaments des conducteurs (9) de conductivité plus élevée.

11. Elément chauffant mince de surface, flexible, selon l'une des revendications 1 à 10, **caractérisé en ce que** les conducteurs (8), constitués par les filaments d'acier, s'étendent sensiblement de manière rectiligne.

12. Elément chauffant mince de surface, flexible, selon l'une des revendications 1 à 11, **caractérisé en ce que** seuls les conducteurs d'acier (8) ou seuls les conducteurs (9) de conductivité plus élevée sont reliés électriquement aux fibres conductrices (3) du champ chauffant (4).

13. Elément chauffant mince de surface, flexible, selon l'une des revendications 1 à 12, **caractérisé en ce que** les filaments d'acier (8) sont constitués de filaments d'acier fin spécial.

14. Elément chauffant mince de surface, flexible, selon l'une des revendications 1 à 13, **caractérisé en ce que** les filaments des conducteurs (9) de conductibilité plus élevée sont réalisés en cuivre ou en alliages de cuivre.

15. Elément chauffant mince de surface, flexible, selon l'une des revendications 1 à 14, **caractérisé en ce que** les filaments des conducteurs (9) de conductibilité plus élevée présentent en supplément une couche de protection contre la corrosion.

16. Elément chauffant mince de surface, flexible, selon la revendication 15, **caractérisé en ce que** la couche de protection est réalisée en étain, argent ou nickel.

17. Procédé de fabrication d'un élément chauffant mince de surface (1), flexible, notamment d'un élément chauffant mince de surface, flexible, pour des systèmes de chauffage de sièges, comprenant un champ chauffant (4) en conducteurs chauffants (3), en particulier des fibres de carbone, que l'on agence dans la région d'un matériau de support flexible (2), et que l'on relie électriquement à au moins un ruban de contact (6), élément chauffant dans lequel dans la zone du dit ruban de contact (6) existent au moins deux types de conducteurs en matériau différent, que l'on relie mutuellement sur le plan électrique, **caractérisé en ce que** le ruban de contact (6) est réalisé sous la forme d'une bande textile, qui renferme une part de conducteurs (8) sous la forme de filaments d'acier et une part de conducteurs (9) sous la forme de filaments d'une conductivité plus élevée que celle des filaments d'acier, les conducteurs (9) de conductivité plus élevé étant agencés de manière ondulée ou en forme de méandres, en croisant les conducteurs d'acier (8) considérés et en étant en contact avec ceux-ci, et les conducteurs (9) de conductivité plus élevée se situant uniquement au-dessus ou uniquement en-dessous des filaments d'acier (8), et **en ce que** les conducteurs (8, 9) sont maintenus sur la bande textile (7) au moyen de fils textiles et/ou métalliques, et la bande textile (7) étant reliée au matériau de support (2).

18. Procédé selon la revendication 17, **caractérisé en ce que** les deux conducteurs (8, 9) du ruban de contact (6) sont inclus dans la bande textile (10) par une technique de tricot.

19. Procédé selon la revendication 17, **caractérisé en ce que** l'on met en oeuvre des fils de polyester ou des fils de polyamide en guise de fils pour fixer les conducteurs (8, 9) à la bande textile (10).

20. Procédé selon la revendication 17, **caractérisé en ce qu'**on rapporte les conducteurs (8, 9) sur la bande (10) moyennant une technique de couture-tricotage (du type Malimo), au moins un type de conducteur étant inséré en duite courte ou partielle, et **en ce qu'**exclusivement le/les fil(s) de polyester ou le/les fil(s) de polyamide forme/forment des mailles.

21. Procédé selon la revendication 17, **caractérisé en ce que** l'on agence au moins un conducteur (9) du ruban de contact (6) selon une forme ondulée ou en méandres le long de la bande de support (7), l'axe d'ondulation correspondant à la direction de la bande.

22. Utilisation d'un élément chauffant mince de surface selon l'une des revendications 1 à 16 en tant qu'élément chauffant mince de surface (1) pour un système de chauffage de siège d'un siège de véhicule.
